# EUROPEAN PATENT APPLICATION

(11) **EP 4 691 635 A1**
(43) Date of publication of application: **11.02.2026**
(21) Application number: 24780752.2
(22) Date of filing: 28.03.2024
(51) Int. Cl.: B01J 27/24, B01J 37/08, C01C 1/04

(54) **REACTOR, METHOD FOR PRODUCING METAL NITRIDE CATALYST, AND METHOD FOR SYNTHESIZING AMMONIA**

(30) Priority: 30.03.2023 JP 2023056772
(71) Applicant: NGK Insulators, Ltd., Nagoya-shi, Aichi 467-8530 (JP)
(72) Inventor: HORI, Keigo, Nagoya-shi, Aichi 467-8530 (JP); KOBAYASHI, Yoshimasa, Nagoya-shi, Aichi 467-8530 (JP); KATSUDA, Yuji, Nagoya-shi, Aichi 467-8530 (JP)
(74) Representative: Müller-Boré & Partner Patentanwälte PartG mbB
(86) International application number: PCT/JP2024/012909
(87) International publication number: WO 2024/204654

(57) **Abstract**

A reactor including a metal nitride catalyst represented by the general formula MNx in which M is a metal element having a level of a Fermi energy of higher than -4.4 eV vs. LV., and x is a range that can take a rock salt type structure.

## Description

### FIELD OF THE INVENTION

This invention relates to a reactor, a method for producing a metal nitride catalyst, and a method for synthesizing ammonia.

### BACKGROUND OF THE INVENTION

Ammonia is an important chemical substance used in the synthesis of chemical fertilizers, acrylonitrile and nitric acid, and is produced by the Haber-Bosch process. The Haber-Bosch process can be used to synthesize ammonia from nitrogen and hydrogen as raw materials using a catalyst. However, since the synthesis requires high temperature and high pressure conditions, it requires complex processes to reduce increases in facility costs and power consumption, and energy loss.

If ammonia can be synthesized under low pressure and low temperature conditions, facility costs and power consumption can be reduced and the steps can be simplified. Therefore, catalysts for the synthesis of ammonia under low pressure and low temperature conditions are being developed.

For example, Patent Literature 1 proposes a catalyst containing: any one of at least one element selected from molybdenum, tungsten, rhenium, iron, cobalt, ruthenium, and osmium, or combinations of iron and ruthenium, ruthenium and rhenium, and iron and molybdenum; potassium or sodium; and alumina, thoria, zirconia or silica, the transition metal and alkali metal being substantially in the metallic state. It discloses that the conditions for synthesizing ammonia using the catalyst are a reaction temperature of 150 to 450°C and a reaction pressure of 50 to 2000 kg/cm² (about 5 to about 200 MPa).

Patent Literature 2 proposes a catalyst in which metal elements of Groups 6 to 9 (e.g., Ru and the like) are supported on a mayenite type compound (e.g., electride and the like) containing 10¹⁵ cm⁻³ or more of conduction electrons. It discloses that the conditions for synthesizing ammonia using the catalyst are a reaction temperature of 100 to 600°C and a reaction pressure of 10 kPa to 30 MPa.

Patent Literature 3 proposes a catalyst in which a transition metal (e.g., Ru) is supported on a metal oxyhydride. It discloses that the conditions for synthesizing ammonia using the catalyst are a reaction temperature of 200 to 600°C and a reaction pressure of 0.01 to 20 MPa.

Non-Patent Literature 1 proposes a catalyst in which Ni is supported on a metal nitride (CeN), and it discloses that nitrogen vacancies of the metal nitride activate both nitrogen and hydrogen. The conditions for synthesizing ammonia using the catalyst are a reaction pressure of 0.1 to 0.9 MPa and a reaction temperature of 150 to 400°C. However, in view of the amount of ammonia produced, a reaction temperature of 300 to 400°C would be appropriate.

### PRIOR ART

### Patent Literatures

[Patent Literature 1] Japanese Patent Application Publication No. S51-47674 A
[Patent Literature 2] WO 2012/077658 A1
[Patent Literature 3] WO 2021/006136 A1

### Non-Patent Literature

[Non-Patent Literature 1] Tian-Nan Ye, et.al., "Contribution of Nitrogen Vacancies to Ammonia Synthesis over Metal Nitride Catalysts", JACS, 2020, 142, 14374-14383

### SUMMARY OF THE INVENTION

### Problem to be Solved by the Invention

Although the catalyst of Patent Literature 1 is capable of synthesizing ammonia under conditions of lower pressure and lower temperature than conventional conditions, these levels cannot be sufficient.

The catalyst of Patent Literature 2 is not suitable for mass production because it is costly and time-consuming to produce a mayenite type compound containing 10¹⁵ cm⁻³ or more of conduction electrons, and it is difficult to control the production conditions.

The catalyst of Patent Literature 3 is an unstable material with insufficient oxidation resistance, and is therefore difficult to handle it industrially.

The catalyst of Non-Patent Literature 1 still requires a high reaction temperature among the conditions for synthesizing ammonia.

Although the problems of the conventional arts have been described above with a focus on ammonia synthesis, there is also a need for reducing the reaction temperature and reaction pressure in syntheses other than ammonia synthesis from the viewpoint of reducing facility costs and power consumption.

This invention has been made to solve the problems described above, and an object of this invention is to provide a reactor which uses a metal nitride catalyst that can be supplied industrially and stably, and that is capable of carrying out a predetermined reaction even at a low reaction temperature and a low reaction pressure.

Another object of this invention is to provide a method for producing a metal nitride catalyst that can be supplied industrially and stably and that can carry out a predetermined reaction at a low reaction temperature and a low reaction pressure.

A further object of this invention is to provide a method for synthesizing ammonia, which is capable of synthesizing ammonia even at ordinary pressure and at a reaction temperature of 300°C or less.

### Means for Solving the Problem

As a result of intensive studies to solve the above problems, the inventors have found that certain metal nitrides are useful as catalysts, and completed this invention. In other words, this invention is exemplified as follows:
[1] A reactor comprising a metal nitride catalyst represented by the general formula MNx in which M is a metal element having a level of a Fermi energy of higher than -4.4 eV vs. LV., and x is a range that can take a rock salt type structure.
[2] The reactor according to [1], wherein the M is at least one metal element selected from Ti, Hf, Ta, Mo, Cr, V, and Zr.
[3] The reactor according to [1] or [2], wherein x is more than or equal to 0.4 and less than 1.0.
[4] The reactor according to any one of [1] to [3], wherein the metal nitride catalyst has a specific surface area of 0.1 m²/g or more.
[5] The reactor according to any one of [1] to [4], wherein the metal nitride catalyst has an oxygen content of 15 atomic % or less.
[6] The reactor according to any one of [1] to [5], wherein at least one transition metal element selected from transition metal elements of Groups 6, 7, 8, 9, 10, 11, and 12 is supported on the metal nitride catalyst.
[7] The reactor according to [6], wherein the transition metal element to be supported is at least one selected from Ru, Ni, and Fe.
[8] The reactor according to [6] or [7], wherein an amount of the transition metal element supported is 0.1% by mass or more.
[9] The reactor according to any one of [1] to [5], which is used for synthesizing ammonia.
[10] The reactor according to any one of [6] to [8], which is used for synthesizing ammonia.
[11] The reactor according to any one of [1] to [10], further comprising a honeycomb structure having an outer peripheral wall and partition walls provided on an inner side of the outer peripheral wall, the partition walls defining a plurality of cells, each of the cells extending from a first end face to a second end face of the honeycomb structure,
   wherein the metal nitride catalyst is held in the partition walls of the honeycomb structure.
[12] The reactor according to [11], wherein the honeycomb structure comprises cordierite or a Si-SiC-based material.
[13] A method for producing a metal nitride catalyst, comprising heating a metal nitride represented by the general formula MN in which M is a metal element having a level of a Fermi energy of higher than -4.4 eV vs. LV. at 1200 to 1800°C under vacuum conditions.
[14] A method for synthesizing ammonia, comprising allowing nitrogen and hydrogen to react with each other over the metal nitride catalyst using the reactor according to any one of [1] to [12].
[15] The method for synthesizing ammonia according to [14], wherein the method is performed at a temperature of 300°C or less and a pressure of 0.9 MPa or less.
[16] The method for synthesizing ammonia according to [14] or [15], wherein the method is performed at a space velocity of 5,000 hr⁻¹ or more.

### Effects of Invention

According to this invention, it is possible to provide a reactor which uses a metal nitride catalyst that can be supplied industrially and stably, and that is capable of carrying out a predetermined reaction even at a low reaction temperature and a low reaction pressure.

Also, according to this invention, it is possible to provide a method for producing a metal nitride catalyst that can be supplied industrially and stably and that can carry out a predetermined reaction at a low reaction temperature and a low reaction pressure.

Further, according to this invention, it is possible to provide a method for synthesizing ammonia, which is capable of synthesizing ammonia even at ordinary pressure and at a reaction temperature of 300°C or less.

### BRIEF DESCRIPTION OF THE DRAWINGS

FIG. 1 is a schematic view of a cross section of a reactor having a honeycomb structure, which is parallel to an extending direction of cells; and
FIG. 2 is a schematic view of the cross section of the reactor taken along the line a-a' in FIG. 1.

### DETAILED DESCRIPTION OF THE INVENTION

Hereinafter, embodiments of the present invention will be specifically described. It should be understood that the invention is not limited to the following embodiments, and those which have appropriately added changes, improvements and the like to the following embodiments based on knowledge of a person skilled in the art without departing from the spirit of the invention fall within the scope of the invention.

### (1. Reactor)

The reactor according to an embodiment of this invention includes a metal nitride catalyst.

The metal nitride catalyst used for the reactor according to an embodiment of this invention can activate nitrogen and hydrogen, and therefore can be used as a catalyst in various reaction systems that use nitrogen and/or hydrogen as raw materials. Among these, the metal nitride catalyst used for the reactor according to an embodiment of this invention is suitable for use as a catalyst for synthesizing ammonia using nitrogen and hydrogen as raw materials.

The metal nitride catalyst used for the reactor according to an embodiment of this application is represented by the general formula MNx in which M is a metal element having a level of a Fermi energy of higher than -4.4 eV vs. LV., and x is a range that can take a rock salt type structure. Such a metal nitride catalyst can activate nitrogen and hydrogen when it is brought into contact with nitrogen and hydrogen, and therefore can carry out a predetermined reaction even at a low reaction temperature and a low reaction pressures (particularly, ammonia can be synthesized even at ordinary pressure and at a reaction temperature of 300°C or less).

The M in the general formula MNx is not particularly limited as long as it is a metal element having a level of a Fermi energy of higher than -4.4 eV vs. LV., and can be, for example, at least one metal element selected from Ti, Hf, Ta, Mo, Cr, V, and Zr. When the M is one of these exemplified metal elements, MN is expressed as TiN, HfN, TaN, MoN, CrN, VN, or ZrN. The Fermi energies of these MNs are respectively as follows:
TiN: -4.1 eV;
HfN: -4.3eV;
TaN: -4.4eV;
MoN: -4.2eV;
CrN: -4.0eV;
VN: -3.9 eV; and
ZrN: -4.1eV.

Further, the M in the general formula MNx is preferably Ti from the viewpoints of stability at room temperature and in the air atmosphere, and industrially stable supply, and the like. In other words, MN is preferably TiN.

The x in the general formula MNx is not limited as long as it is in the range that can take a rock salt type structure. When the M in the general formula MNx is the metal element as exemplified above, the range of x in which the rock salt type structure can be taken is 0.4 to 1.2, preferably 0.5 to 1.1.

The metal nitride catalyst represented by the general formula MNx is preferably anion deficient. The anion-deficient metal nitride catalyst easily reduces hydrogen to hydride ions (H⁻). Due to their strong reducing properties, the hydride ions can easily react with N to produce a predetermined compound such as ammonia.

When the metal nitride catalyst is anion deficient, the x in the general formula MNx is more than or equal to 0.4 and less than 1.0, preferably 0.5 to 0.9, and more preferably 0.6 to 0.8.

The general formula MNx of the metal nitride catalyst can be identified by measurement using TEM-EDX (energy dispersive X-ray spectroscopy). Specifically, a line analysis can be performed from an outside to an inside of the metal nitride catalyst, a content [atomic %] of each element (M and N) can be measured at a position of 10 nm from the surface, and x can be calculated from a ratio of the element contents (N/M).

The metal nitride catalyst represented by the general formula MNx preferably has a specific surface area of 0.1 m²/g or more. The specific surface area in such a range allows a sufficient contact area with hydrogen and nitrogen to be ensured, thereby increasing an amount of a predetermined compound produced, such as ammonia. From the viewpoint of stably obtaining this effect, the specific surface area of the metal nitride catalyst is more preferably 0.2 to 100 m²/g, and even more preferably 0.3 to 80 m²/g.

Here, the specific surface area of the metal nitride catalyst can be measured by the BET method. The adsorbed gas molecule used in the BET method may be nitrogen, argon, krypton, or the like.

The metal nitride catalyst represented by the general formula MNx preferably has an oxygen content of 15 atomic % or less. Such an oxygen content allows hydrogen molecules to be easily dissociated on the surface of the metal nitride catalyst to generate hydride ions. From the viewpoint of stably obtaining this effect, the oxygen content of the metal nitride catalyst is more preferably 12 atomic % or less, and even more preferably 10 atomic % or less.

As used herein, the oxygen content of the metal nitride catalyst means an oxygen content [atomic %] obtained by measuring each element using the TEM-EDX described above.

The shape of the metal nitride catalyst represented by the general formula MNx is not particularly limited, and it can be in various shapes such as aggregated shapes such as pellets, powders, and films. When the metal nitride catalyst is in the powder shape, its average particle diameter is generally 1 nm to 10 µm.

As used herein, the term "average particle diameter" refers to a particle diameter at 50% of an integrated value (D50) in a particle size distribution determined by the laser diffraction/scattering method.

The metal nitride catalyst represented by the general formula MNx functions as a catalyst by itself, but it may also support at least one transition metal element selected from the transition metal elements of Groups 6, 7, 8, 9, 10, 11, and 12, if necessary. These transition metal elements are used as homogeneous and heterogeneous catalysts in various reaction systems. Therefore, by supporting these transition metal elements on the metal nitride catalyst, they can be used as catalysts in various reaction systems.

The Group 6 transition metal elements include Cr, Mo and W. The Group 7 transition metal elements include Mn, Tc and Re. The Group 8 transition metal elements include Fe, Ru and Os. The Group 9 transition metal elements include Co, Rh and Ir. The Group 10 transition metal elements include Ni, Pd and Pt. The Group 11 transition metal elements include Cu, Ag and Au. The Group 12 transition metal elements include Zn, Cd and Hg. These transition metal elements can be used alone or in combination of two or more. Intermetallic compounds of these transition metal elements may also be used.

Among the above various elements, when they are used as catalysts for synthesizing ammonia, the transition metal elements are preferably Cr, Mo, Mn, Re, Fe, Ru, Os, Co, Rh, Ni, Pd, and Pt, more preferably Mo, Re, Fe, Ru, Os, Co, and Ni, and even more preferably Ru, Ni, and Fe. These transition metal elements have higher bonding energy with nitrogen, and therefore can increase the amount of ammonia produced.

The amount of the transition metal element supported is not particularly limited, but it may preferably be 0.1% by mass or more, more preferably 0.3 to 40% by mass, and even more preferably 0.5 to 20% by mass. With such a supported amount, the effect of supporting the transition metal element can be sufficiently ensured.

As used herein, the amount of the transition metal element supported means a ratio of the transition metal element to the total amount of the metal nitride catalyst and the transition metal element.

The method for producing the metal nitride catalyst represented by the general formula MNx is not particularly limited, and the catalyst can be produced according to a known method. Further, since metal nitrides are commercially available, such commercially available metal nitrides may be used as catalysts.

The anion-deficient metal nitride catalyst (a metal nitride catalyst in which x in the general formula MNx is more than or equal to 0.4 and less than 1.0) can be produced by heating a metal nitride represented by the general formula MN (M is a metal element having a level of a Fermi energy of higher than 4.4 eV vs. LV.) under vacuum conditions at 1200 to 1800°C, preferably 1300 to 1700°C. The heating time is not particularly limited, but it may generally be 1 to 10 hours, preferably 2 to 5 hours.

When the predetermined transition metal element is supported on the metal nitride catalyst, the method for supporting the element is not particularly limited, and any known method can be used.

For example, if the metal nitride catalyst is a powder or the like, the transition metal element can be supported by using an impregnation method, a physical mixing method or the like. In this case, a transition metal compound may be used as a supply source of the transition metal element, and the metal nitride catalyst is impregnated with the transition metal compound or the transition metal compound is physically mixed with the metal nitride catalyst, and then the transition metal compound may be thermally decomposed to obtain a transition metal element. The thermal decomposition temperature is not particularly limited and may be set appropriately depending on the type of transition metal compounds used.

When the metal nitride catalyst is in the aggregated or film shape, the transition metal element can be supported by using an impregnation method, a CVD method, a sputtering method or the like.

The transition metal compound used as a supply source of the transition metal element is not particularly limited as long as it is thermally decomposable, and examples include inorganic transition metal compounds and organic transition metal compounds.

Examples of the transition metal compund includes triruthenium dodecacarbonyl [Ru₃(CO)₁₂], dichlorotetrakis(triphenylphosphine)ruthenium(II) [RuCl₂(PPh₃)₄], dichlorotris(triphenylphosphine)ruthenium(ll) [RuCl₂(PPh₃)₃], tris(acetylacetonato)ruthenium(lll) [Ru(acac)₃], ruthenocene [Ru(C₅H₅)], ruthenium chloride [RuCl_{3]}, pentacarbonyliron [Fe(CO)s], tetracarbonyliron iodide [Fe(CO)ₐI₂], iron chloride [FeCl₃], ferrocene [Fe(C₅H₅)₂], tris(acetylacetonato)iron (III) [Fe(acac)3], dodecacarbonyltriiron [Fe₃(CO)₁₂], nickel chloride [NiCl₂], nickel(II) acetylacetonate [Ni(acac)₂], and tetracarbonylnickel [Ni(CO)₄]. These can be used alone or in combination of two or more.

The reactor according to an embodiment of this invention includes the metal nitride catalyst described above. Therefore, this reactor can carry out a predetermined reaction even at a low reaction temperature and at a low reaction pressure (particularly, ammonia can be synthesized even at ordinary pressure and at a reaction temperature of 300°C or less).

The reactor is not particularly limited as long as it has a structure that can accommodate the metal nitride catalyst and bring the metal nitride catalyst into contact with reaction raw materials (e.g., hydrogen and nitrogen), and an existing reactor can be used.

The reactor preferably includes a honeycomb structure having an outer peripheral wall and partition walls provided on an inner side of the outer peripheral wall, the partition walls defining a plurality of cells, each of the cells extending from a first end face to a second end face of the honeycomb structure,

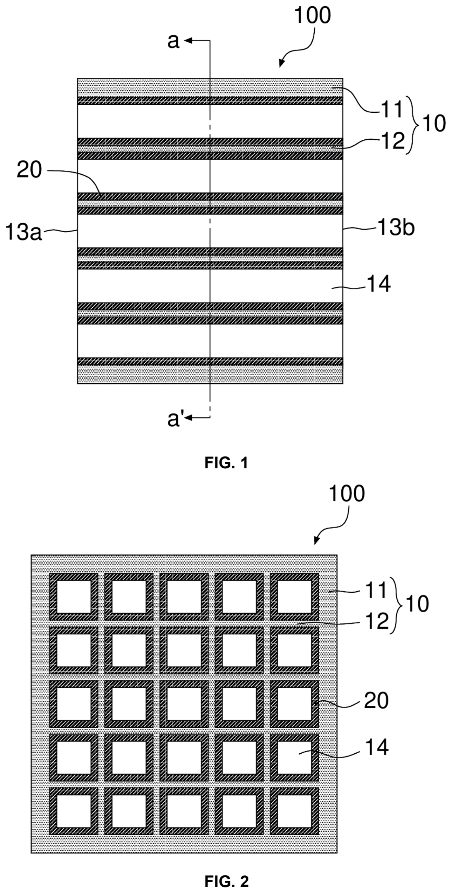

Here, FIG.1 illustrates a schematic view of a cross section of a reactor having a honeycomb structure, which is parallel to an extending direction of cells. Also, FIG. 2 illustrates a schematic view of the cross section of the reactor taken along the line a-a' in FIG. 1.

As illustrated in FIGS. 1 and 2, a reactor 100 includes a honeycomb structure 10 having an outer peripheral wall 11 and partition walls 12 provided on an inner side of the outer peripheral wall 11, the partition walls 12 defining a plurality of cells 14, each of the cells 14 extending from a first end face 13a to a second end face 13b of the honeycomb structure 10. Also, a metal nitride catalyst 20 is held in the partition walls 12 of the honeycomb structure 10. The metal nitride catalyst 20 may also be held on the outer peripheral wall 11 facing the cells 14. By holding the metal nitride catalyst 20 on the partition walls 12 of the honeycomb structure 10, the geometric surface area on which the metal nitride catalyst 20 is supported can be increased, thereby improving the reaction efficiency and enabling the reactor 100 to be made smaller.

The shape of the cross section (cross section shown in FIG. 2) orthogonal to the extending direction of the cells 14 of the honeycomb structure 10 is not particularly limited, but in addition to the quadrangle shown in FIG. 2, various shapes such as a circle, an ellipse, a triangle, a hexagon, and an octagon can be used.

It should be noted that the size of the honeycomb structure 10 is not particularly limited, and it may be adjusted appropriately depending on the type of the reaction, the amount of processing, and the like.

The shape of each cell 14 (the shape of each cell 14 in the cross section orthogonal to the extending direction of the cells 14) is not particularly limited, but it may be of various shapes such as a circle, an ellipse, a triangle, a rectangle, a hexagon, and an octagon.

The size of each cell 14 is not particularly limited, but the diameter of each cell 14 in the cross section orthogonal to the extending direction of the cells 14 may preferably be 1 to 3 mm, and more preferably 1.5 to 2.5 mm. The diameter of each cell 14 of 1 mm or more allows the amount of reaction raw materials that can be supplied into the cells 14 to be increased. Further, the diameter of each cell 14 of 3 mm or less allows the contact area with the metal nitride catalyst 20 to increase, thereby improving the reaction efficiency. As used herein, the diameter of each cell 14 means a length of a portion where the diameter is maximum.

The thickness of the outer peripheral wall 11 is not particularly limited, but it may preferably be 0.5 to 2.0 mm, and more preferably 0.6 to 1.8 mm. The thickness of the outer peripheral wall 11 of 0.5 mm or more allows strength against external impacts to be ensured. The thickness of the outer wall 11 of 2.0 mm or less allows the amount of reaction raw materials that can be supplied to the honeycomb structure 10 to be increased.

The thickness of the partition walls 12 is not particularly limited, but it may preferably be 0.05 to 0.3 mm, and more preferably 0.08 to 0.15 mm. The thickness of the partition walls 12 of 0.05 mm or more allows the strength of the honeycomb structure 10 to be ensured. Further, the thickness of the partition walls 12 of 0.3 mm or less allows the amount of reaction raw materials that can be supplied into the cells 14 to be increased.

The material of the honeycomb structure 10 (the outer peripheral wall 11 and the partition walls 12) is not particularly limited, but the honeycomb structure 10 may preferably be made of cordierite or Si-SiC-based material. The honeycomb structure 10 made of such a material allows the reaction to be efficiently carried out within the honeycomb structure 10 without preventing the predetermined reaction.

The metal nitride catalyst 20 held on the partition walls 12 of the honeycomb structure 10 is not particularly limited, but it may preferably be in a layer form. The thickness of the metal nitride catalyst 20 in the layer form is not particularly limited and may be set appropriately depending on the amount of processing.

The reactor 100 can carry out a reaction by supplying the reaction raw materials into the cells 14. The reactor 100 may be used in either a batch process or a flow process, but it is suitable for use in the flow process.

When the reactor 100 is used in the batch process, the reaction raw materials can be contained in the cells 14 and the reaction can be carried out by plugging either the first end face 13a or the second end face 13b. Furthermore, when the reactor 100 is used in the flow method, the reaction raw materials are continuously introduced from the first end face 13a to carry out the reaction in the cells 14, and the resulting reaction product can be continuously discharged from the second end face 13b.

### (2. Method for Synthesizing Ammonia)

The method for synthesizing ammonia according to an embodiment of this invention is carried out by using the metal nitride catalyst described above and allowing nitrogen and hydrogen to react with each other over the metal nitride catalyst. According to this synthesis method, the above metal nitride catalyst is used, so that ammonia can be synthesized even if the reaction temperature and reaction pressure are lower, particularly at ordinary pressure and at a reaction temperature of 300°C or less.

The reaction temperature in the method for synthesizing ammonia according to an embodiment of this invention is not particularly limited, but it may preferably be 300°C or less, more preferably 280°C or less, and even more preferably 250°C or less. Since the synthesis of ammonia is an exothermic reaction, a lower temperature range is more advantageous for the production of ammonia in terms of chemical equilibrium, and therefore, the temperature within this range can increase the amount of ammonia produced. Further, a decrease in the reaction temperature can reduce facility costs and power consumption. It should be noted that the lower limit of the reaction temperature is not particularly limited, but it may generally be 150°C, and preferably 200°C.

The reaction pressure in the method for synthesizing ammonia according to an embodiment of this invention is not particularly limited, but it may preferably be 0.9 MPa or less, and more preferably ordinary pressure (atmospheric pressure). Such a reaction pressure can reduce facility costs and power consumption.

However, since the amount of ammonia produced increases as the reaction pressure increases, the reaction pressure may be increased in order to increase the amount of ammonia produced. In this case, the reaction pressure is preferably 20 MPa or less, and more preferably 15 MPa or less.

In addition, the reaction pressure means a pressure of a mixed gas containing nitrogen and oxygen.

The space velocity (supply rate) of the reaction raw materials in the method for synthesizing ammonia according to an embodiment of this invention is not particularly limited, but it may preferably be 5000 hr⁻¹ or more. Such a space velocity allows nitrogen and oxygen to react with each other efficiently. In addition, the upper limit of the space velocity is not particularly limited, but it may generally be 50,000 hr⁻¹ or less.

### EXAMPLES

Hereinafter, the present invention will be more specifically described with reference to Examples, but the present invention is not limited to these Examples.

### (Example 1)

Commercially available TiN (average particle diameter of 20 nm) was prepared as a metal nitride and used as a metal nitride catalyst. The specific surface area of the metal nitride catalyst was measured by the BET method (adsorbed gas molecules: krypton), and as a result, it was 57 m²/g. The oxygen content of the metal nitride catalyst was measured by TEM-EDX, and as a result, it was 0.1 atomic %. In the following examples, the specific surface area and oxygen content were measured by the same methods.

### (Example 2)

Commercially available TiN (average particle diameter of 20 nm) was powder-pressed at 10 kN to form a pellet. The pellet-shaped TiN was then placed in a BN crucible and heated in a vacuum furnace at 1500°C for 3 hours to cause anion deficiency, thereby obtaining pellet-shaped TiN_{0.8}. The pellet-shaped TiN_{0.8} was then crushed in a mortar to prepare a metal nitride catalyst. The specific surface area of the metal nitride catalyst was measured, and as a result, it was 0.3 m²/g. The oxygen content of the metal nitride catalyst was measured, and as a result, it was 11 atomic %. In addition, the TiN_{0.8} was identified using TEM-EDX according to the above method.

### (Example 3)

Ru₃(CO)₁₂ (Sigma-Aldrich) was added to commercially available TiN (average particle diameter of 20 nm) so that the amount of Ru metal supported was 1.2% by mass, and physically mixed in a mortar to obtain a mixed powder. The mixed powder was then heated in a vacuum to thermally decompose Ru₃(CO)₁₂ and support Ru metal, which was used as a metal nitride catalyst. For the heating, the temperature was increased from room temperature to 40°C at 2°C/min and held for 1 hour, increased from 40°C to 70°C at 0.25°C/min and held for 1 hour, increased from 70°C to 120°C at 0.4°C/min and held for 1 hour, and increased from 120°C to 250°C at 0.9°C/min and held for 2 hours. The specific surface area of the metal nitride catalyst was measured, and as a result, it was 57 m²/g. The oxygen content of the metal nitride catalyst was measured, and as a result, it was 12 atomic %.

### (Example 4)

Ru metal was supported by the same method as that of Example 3, with the exception that the TiN_{0.8} prepared in Example 2 was used in place of commercially available TiN (average particle diameter of 20 nm), and this was used as a metal nitride catalyst. The specific surface area of the metal nitride catalyst was measured, and as a result, it was 0.3 m²/g. The oxygen content of the metal nitride catalyst was measured, and as a result, it was 12 atomic %.

### (Comparative Example 1)

Ru metal was supported by the same method as that of Example 3, with the exception that commercially available γ-AIO (Baikalox CR125 manufactured by Baikowski) was used in place of commercially available TiN (average particle diameter of 20 nm), and this was used as a metal nitride catalyst.

0.4 g of each of the metal nitride catalysts obtained above was filled in a stainless steel reaction tube through which a hydrogen gas at 400° C was passed for 1 hour as a pretreatment, and ammonia was then synthesized.

Ammonia synthesis was carried out by allowing a hydrogen gas and a nitrogen gas to flow through the reaction tube at a flow rate of 150 mL/min and 50 mL/min, respectively. In this case, the reaction pressure was ordinary pressure, the reaction temperature was each temperature shown in Table 1 (400°C, 300°C, 250°C, and 200°C), and the reaction time was 30 minutes. The synthesis of ammonia was repeated 10 times under these conditions to measure an amount of ammonia produced, and an average value of the results of the latter five measurements was used as the measurement results of the amount of ammonia produced.

The amount of ammonia produced was measured by a gas chromatography system (Agilent Technologies 990 Micro GC system) for the gas leaving the reaction tube, using a PoraPLOT Q column from Agilent Technologies. Ammonia was detected and measured with a retention time of 63.5.

Table 1 shows the measurement results of the amount of ammonia produced. The measurement results are expressed as the amount of ammonia produced per weight of metal nitride catalyst, relative to the amount of ammonia produced at 400°C in Comparative Example 1.

**[Table 1]**

| | **Reaction Temperature (°C)** | | | |
|---|---|---|---|---|
| | **400** | **300** | **250** | **200** |
| **Example 1** | 9 | 11 | 13 | 10 |
| **Example 2** | 11 | 19 | 16 | 13 |
| **Example 3** | 12 | 7 | 16 | 12 |
| **Example 4** | 31 | 31 | 32 | 38 |
| **Comparative Example 1** | 1 | 0 | 12 | 21 |

As shown in Table 1, the metal nitride catalysts according to Examples 1 to 4 were able to produce a higher amount of ammonia even at the reaction temperature of 300°C or less.

As can be seen from the above results, according to this invention, it is possible to provide a reactor which uses a metal nitride catalyst that can be supplied industrially and stably, and that is capable of carrying out a predetermined reaction even at a low reaction temperature and at a low reaction pressure. Also, according to this invention, it is possible to provide a method for producing a metal nitride catalyst that can be supplied industrially and stably and that can carry out a predetermined reaction at a low reaction temperature and at a low reaction pressure. Further, according to this invention, it is possible to provide a method for synthesizing ammonia, which is capable of synthesizing ammonia even at ordinary pressure and at a reaction temperature of 300°C or less.

### Description of Reference Numerals

10 honeycomb structure
11 outer peripheral wall
12 partition wall
13a first end face
13b second end face
14 cell
20 metal nitride catalyst
100 reactor

## Claims

1. A reactor comprising a metal nitride catalyst represented by the general formula MNx in which M is a metal element having a level of a Fermi energy of higher than -4.4 eV vs. LV., and x is a range that can take a rock salt type structure.

2. The reactor according to claim 1, wherein the M is at least one metal element selected from Ti, Hf, Ta, Mo, Cr, V, and Zr.

3. The reactor according to claim 1 or 2, wherein the x is more than or equal to 0.4 and less than 1.0.

4. The reactor according to claim 3, wherein the metal nitride catalyst has a specific surface area of 0.1 m²/g or more.

5. The reactor according to claim 3, wherein the metal nitride catalyst has an oxygen content of 15 atomic % or less.

6. The reactor according to claim 1 or 2, wherein at least one transition metal element selected from transition metal elements of Groups 6, 7, 8, 9, 10, 11, and 12 is supported on the metal nitride catalyst.

7. The reactor according to claim 6, wherein the transition metal element to be supported is at least one selected from Ru, Ni, and Fe.

8. The reactor according to claim 6, wherein an amount of the transition metal element supported is 0.1% by mass or more.

9. The reactor according to claim 1 or 2, which is used for synthesizing ammonia.

10. The reactor according to claim 6, which is used for synthesizing ammonia.

11. The reactor according to claim 1 or 2, further comprising a honeycomb structure having an outer peripheral wall and partition walls provided on an inner side of the outer peripheral wall, the partition walls defining a plurality of cells, each of the cells extending from a first end face to a second end face of the honeycomb structure,
wherein the metal nitride catalyst is held in the partition walls of the honeycomb structure.

12. The reactor according to claim 11, wherein the honeycomb structure comprises cordierite or Si-SiC-based material.

13. A method for producing a metal nitride catalyst, comprising heating a metal nitride represented by the general formula MN in which M is a metal element having a level of a Fermi energy of higher than -4.4 eV vs. LV. at 1200 to 1800°C under vacuum conditions.

14. A method for synthesizing ammonia, comprising allowing nitrogen and hydrogen to react with each other over the metal nitride catalyst using the reactor according to claim 6.

15. The method for synthesizing ammonia according to claim 14, wherein the method is performed at a temperature of 300°C or less and at a pressure of 0.9 MPa or less.

16. The method for synthesizing ammonia according to claim 14, wherein the method is performed at a space velocity of 5,000 hr⁻¹ or more.
